# EUROPEAN PATENT SPECIFICATION

(11) **EP 2 863 731 B1**
(45) Date of publication and mention of the grant of the patent: **09.05.2018**
(21) Application number: 13729365.0
(22) Date of filing: 18.06.2013
(51) Int. Cl.: A01F 15/08

(54) **AGRICULTURAL BALER WITH IMPROVED FRICTION OR MOISTURE SENSOR POSITIONING**
LANDWIRTSCHAFTLICHE BALLENPRESSE MIT VERBESSERTER POSITIONIERUNG EINES REIBUNGS- ODER FEUCHTIGKEITSSENSORS
PRESSE À BALLES AGRICOLE AVEC POSITIONNEMENT AMELIORÉ D'UN CAPTEUR DE FRICTION OU HUMIDITÉ

(30) Priority: 22.06.2012 BE 201200427
(43) Date of publication of application: 29.04.2015
(73) Proprietor: CNH Industrial Belgium nv, 8210 Zedelgem (BE)
(72) Inventor: VERHAEGHE, Didier, 8900 Ieper (BE); DE RYCKE, Stefan, 9870 Zulte (BE); VANDE RYSE, Johan A. E., 8000 Brugge (BE)
(74) Representative: CNH Industrial IP Department
(86) International application number: PCT/EP2013/062562
(87) International publication number: WO 2013/189903

(56) References cited:
- EP-A1- 0 264 497
- WO-A1-2011/012487
- DE-A1- 2 734 766
- DE-A1- 19 748 748
- DE-A1-102004 027 612

## Description

### Field of the Invention

The present invention is related to agricultural balers, used for picking up crop material such as hay or straw from the field or receiving crop material from a harvester, and forming it into rectangular bales.

### State of the art.

Agricultural square or rectangular balers gather crop material into a baling chamber where the material is compressed by a reciprocating plunger to form rectangular bales. The movement of the crops inside the baling chamber is influenced by the moisture level of the crops. The higher the moisture level, the higher the friction force between the baling chamber's side walls and the crops as they are compressed by the plunger. For this reason, one or more moisture and/or friction sensors are commonly incorporated in the chamber. These sensors are configured to interact with one or more actuators arranged to apply an exterior force on the sidewalls, thereby adapting the chamber's cross sectional area, in order to increase or relieve the pressure exerted by these side walls on the bale. Friction or moisture sensors are commonly mounted on one or more sidewalls, in between the inlet of the chamber and the actuators. Due to deformation of the sidewalls caused by the high pressure exerted on the bale, the moisture/friction measurement may become inaccurate.

In EP 0 264 497, such a sensor arrangement in the form of a hydraulic actuator is installed on the first half of the top rail, in between the connection point in front of the top rail, and the connection point with the second half of the top rail. The hydraulic actuator reacts upon a change of the position of the top rail due to an increase or decrease of the friction coefficient between the crop material in the baling chamber, and the walls of the baling chamber. As discussed above, such a position may not be beneficial, since the sidewalls may deform making the measurement inaccurate.

### Summary of the invention

The present invention is related to an agricultural baler according to claim 1 for producing rectangular bales, provided with a baling chamber formed by four side walls, as disclosed in the appended claims. A reciprocating plunger is moving back and forth in the enclosure formed by said walls, thereby compressing crop material and forming rectangular bales. Actuators are provided for adapting the cross-section of the enclosure depending on the required pressure that needs to be exerted on the advancing bale. The actuators apply their force on the sidewalls along transversal support beams or brackets forming the 'density belt'. The baling chamber is provided with one or more friction or moisture sensors. According to the invention these sensors are placed at the location or in the immediate vicinity of one or more reinforcement means arranged in connection with at least one of said sidewalls, said reinforcement means forming an obstruction that locally neutralizes or limits deformation of said sidewalls, said deformation taking place by bulging outwards with respect to the interior of the baling chamber, said deformation being a consequence of the bale forming process. According to the invention, said sensors are located in the immediate vicinity of the 'density belt'. According to an embodiment, at least one side wall is provided with a transversal ridge pointing towards the interior of the chamber, and at least one friction or moisture sensor is located in the immediate vicinity of said ridge. According to another embodiment, at least one sensor is located in the immediate vicinity of a longitudinal reinforcement beam. When it is stated that the sensor is 'at the location of a reinforcement means', this is to be understood as : the sensor is located on a portion of a sidewall of the baling chamber where said reinforcement means (e.g. beam or ridge) is attached to or located on the sidewall.

### Brief description of the figures

Figure 1a is a 3D-view of a baling chamber for forming rectangular bales, as generally known in the art. Figure 1b is a schematic side view cross section of such a known baling chamber.
Figure 2 is a schematic side-view of a baling chamber in a baler according to a first embodiment of the invention.
Figure 3 shows a baling chamber in a baler according to another embodiment of the invention.
Figure 4 shows a baling chamber according to another embodiment, wherein the upper wall is provided with longitudinal reinforcement beams.

### Detailed description of preferred embodiments of the invention

The problems highlighted above in relation to known rectangular balers, as well as preferred embodiments of the invention which solve said problems will now be described with reference to the drawings. The detailed description is not limiting the scope of the invention, which is defined only by the appended claims.

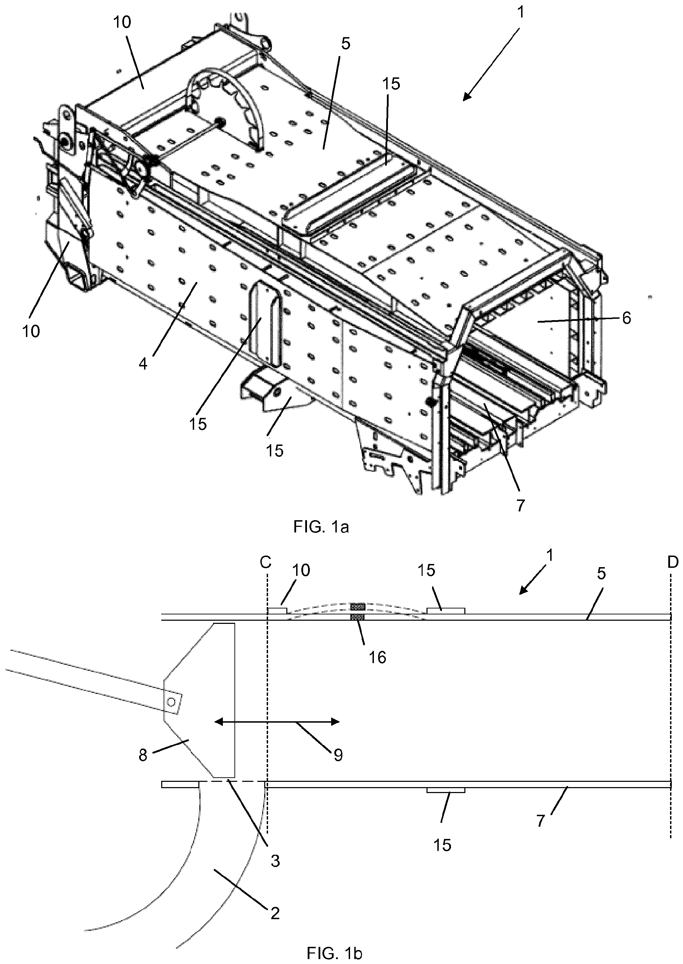

Figure 1a shows a typical baling chamber 1 of a rectangular agricultural baler known in the art. Figure 1b shows a cross section of the baling chamber in a simplified schematic drawing. Crop material is fed from a pre-compression chamber 2 that itself receives crops that are harvested from the ground through a suitable supply means (not shown). The material is fed into the baling chamber through an inlet section 3. The chamber is defined by its four sidewalls 4 to 7 arranged between a first section C at the baling chamber's inlet side and a second section D at the chamber's outlet side. Inside the chamber, a plunger 8 is arranged to move reciprocally in the longitudinal direction 9 of the chamber. The movement of the plunger from left to right is coordinated with the feeding of pre-compressed material into the chamber through inlet section 3, so that each volume of pre-compressed material is pushed into the chamber and added to a bale that is being formed inside the chamber.

Transversally with respect to the longitudinal direction 9, support beams 10 are mounted on the vertical side walls 4 and 6 and on the top wall 5 at the inlet side of the baling chamber. These support beams or equivalent means are the 'fixed points' of the side walls 4 to 6. The sidewalls 4 to 6 are arranged to be pivotable with respect to these fixed points, so that the cross-section of the baling chamber can be adapted according to the need for a higher or lower pressure on the advancing bales. In order to do this, suitable actuators (not shown) are configured to apply pressure on the sidewalls 4 to 6, this pressure being applied on the beams 15 arranged transversally on those side walls. The beams 15 may be referred to as the 'density belt' of the baling chamber. The actuators can be a number of hydraulic pistons arranged around the chamber.

A sensor 16 is shown, mounted on the top wall 5, in between the support beams 10 and the density belt 15, and arranged to be in contact with the crop material in the baling chamber. In the context of the present description, this sensor will be referred to as a 'friction or moisture sensor' or 'friction/moisture sensor'. It may be any known type of sensor that either measures directly the friction forces between crops moving forward in the baling chamber and the sensor, or that measures the moisture content of the advancing crops, in order to derive from that measurement the actual friction or moisture content. The location indicated in figure 1b is a typical location for such a friction/moisture sensor in a baling chamber as known in the art. The inventors of the present invention have found that this location is a source of errors in the obtained friction or moisture measurements, as a consequence of deformations of the chamber's side walls during and as a consequence of the bale forming process.

As the bale is being formed in the chamber, pressure builds up inside said chamber. Figure 1b illustrates the deformation that was found to take place as a consequence of this internal pressure build-up: the sidewalls tend to bulge outwards with respect to the interior of the baling chamber. This deformation causes a decrease of the pressure exerted by the crop on the sensor, and thereby deteriorates the quality of the measurement.

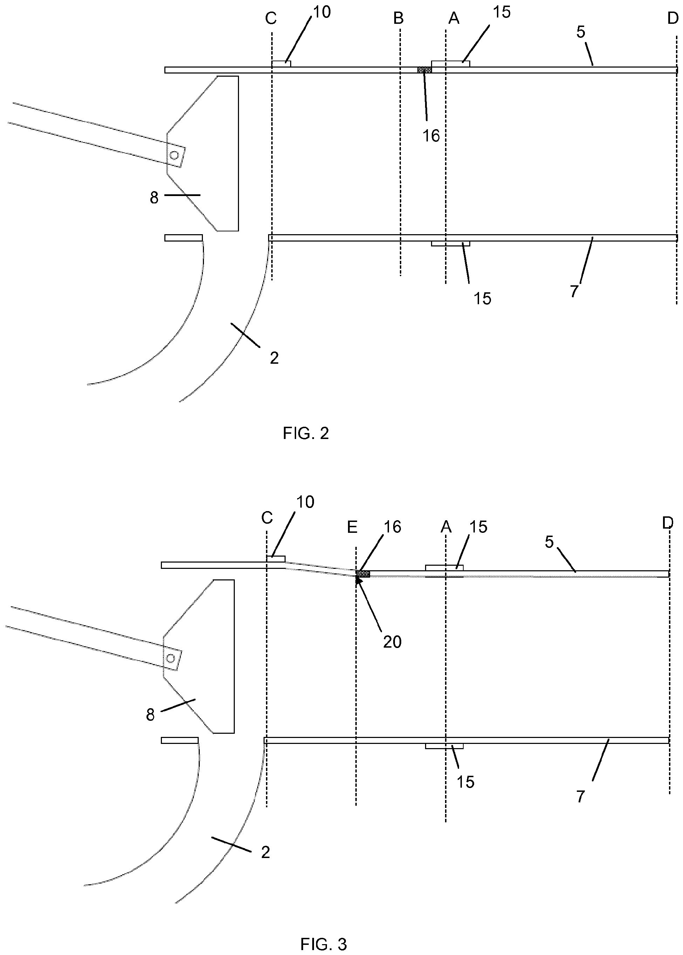

Figure 2 shows a baling chamber in a baler according to a first embodiment of the invention. The friction/moisture sensor 16 is placed immediately before the beams 15 forming the density belt. These beams reinforce the baling chamber's sidewalls: they form an obstruction that neutralizes or limits the above-described outward bulging deformation. Therefore, at the location of the sensor 16, the walls are not or not substantially deformed during the internal pressure build-up, hence the friction/moisture measurement remains reliable at all times. The location shown is not limiting the scope of the invention. According to the invention the sensor 16 is placed at a distance from the density belt 15 that is maximum one fourth of the distance between said density belt and the first section C or second section D of the baling chamber, depending on whether the sensor is placed to the left of the density belt 15 or to the right as seen in the enclosed drawings. For example, according to this embodiment, the sensor is placed between sections A and B shown in figure 2, section A corresponding to the position of the density belt 15, the distance between sections A and B being one fourth of the distance between section A and the first section C of the baling chamber. Likewise, the sensor could be placed to the right of the density belt, at maximum one fourth of the distance between section A and the second section D.

The sensor may be placed on any of the side walls. Several sensors may be used instead of a single sensor. Instead of being placed to the left (as seen in the drawings) of a beam 15 of the density belt, the sensor may be placed also immediately underneath one of the beams 15 or to the right of said beam. It is preferred to have an overlap between the beam 15 and the sensor 16.

Figure 3 shows another embodiment, wherein the baling chamber's side walls, or at least the top wall 5 is provided with a transversal ridge 20, situated between the beam 10 at the inlet and the beam 15 of the density belt. At the location of the ridge 20, the orientation of the side wall changes, in such a way that the angle formed by the parts of the side wall on either side of the ridge 20 is pointing towards the interior of the chamber (in other words, the ridge is seen as a dented portion in the exterior surface of the chamber, not as a bulging portion). This ridge 20 as such is a common feature of baling chambers known in the art, and aimed at increasing the density of the bale, as it advances in the baling chamber. According to the embodiment of figure 3, the friction/moisture sensor 16 is placed in the immediate vicinity of, preferably immediately downstream of the ridge (to the right of the ridge in the drawing of figure 3). As the ridge 20 forms an area that is more resistant to the deformation illustrated in figure 1b (i.e. the ridge forms an obstruction that neutralizes or limits that deformation), this location is beneficial for the operation of the sensor 16, for the same reasons as set out in relation to the embodiment of figure 2. According to a preferred embodiment, the sensor 16 is placed at a distance from the ridge 20 (section E) that is maximum one fourth of the distance between said ridge 20 and the first section C or the density belt (section A) of the baling chamber.

The invention is equally related to an embodiment wherein a friction/moisture sensor is present both at the location of or in the immediate vicinity of the density belt 15 and at the location of or in the immediate vicinity of a ridge 20 in one of the side walls.

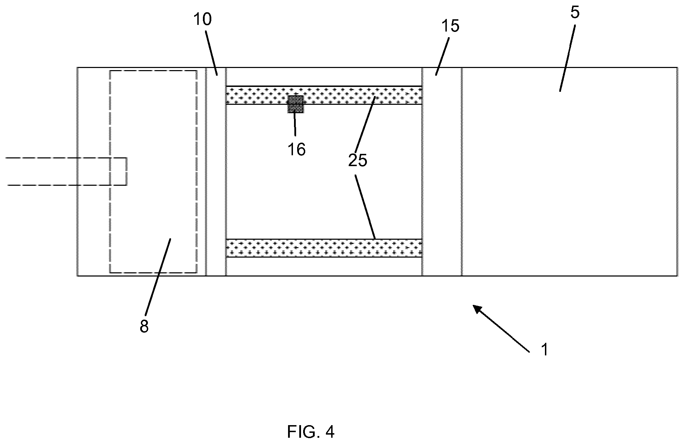

Figure 4 represents another embodiment. A top view of the baling chamber is shown. Between the support beams 10 and the density belt 15, longitudinal reinforcement beams 25 are mounted on the upper side wall. Like the density belt and the ridge described in the previous embodiments, the reinforcement beams 25 form an obstruction that locally neutralizes or limits the outward bulging deformation of the baling chamber's sidewall. The moisture/friction sensor 16 is mounted halfway between the support beams 10 and the density belt 15, but in the immediate vicinity of one of the longitudinal reinforcement beams 25. In the example of figure 4, the sensor is mounted so as to overlap with said beam 25. The longitudinal beams 25 may extend over a longer distance than the distance between the support beams 10 and the density belt 15.

The invention is equally related to an embodiment wherein a friction/moisture sensor 16 is present at the location of or in the immediate vicinity of the density belt 15, at the location of or in the immediate vicinity of a ridge 20 in one of the side walls and at the location of or in the immediate vicinity of a longitudinal reinforcement beam 25.

All of the embodiments described above are thus representations of the invention, according to which the moisture/friction sensor is located at or in the immediate vicinity of a reinforcement means configured to obstruct the outward bulging deformation of the baling chamber's wall. According to an embodiment, 'in the immediate vicinity' means at a maximum distance of 25 cm from said reinforcement means. According to a specific embodiment, said distance between the sensor position and the reinforcement means is between 5 cm and 10 cm. In the above, the distance between the sensor and a reinforcement means (such as a beam or a ridge) is the shortest distance between the sensor position and said reinforcement means.

## Claims

1. An agricultural baler for producing rectangular bales comprising :
» A pre-compression chamber (2),
• a crop material supply means configured to supply harvested crop material to said pre-compression chamber (2),
• a baling chamber (1) configured to receive pre-compressed material from the pre-compression chamber (2), the baling chamber comprising :
∘ four sidewalls (4,5,6,7) defining a rectangular enclosure extending in a longitudinal direction (9) between a first section (C) at the inlet side of the baling chamber and a second section (D) at the outlet side of said chamber, at least one of said sidewalls being displaceable in a direction perpendicular to said longitudinal direction, so as to increase or diminish the cross-section of said enclosure,
∘ a plunger (8) and a driving mechanism adapted to reciprocally move said plunger inside said enclosure, to thereby move crop material in said longitudinal direction, thus progressively forming a rectangular bale in a bale forming process,
∘ one or more reinforcement means (15,20,25) arranged in connection with at least one of said sidewalls, said reinforcement means forming an obstruction that locally neutralizes or limits deformation of said sidewalls by bulging outwards with respect to the interior of the baling chamber, said deformation being a consequence of said bale forming process,
• actuation means arranged for exerting a pressure on said displaceable sidewall(s), to thereby actuate displacement of said sidewall(s);
• at least one friction or moisture sensor (16) mounted on one of said displaceable sidewalls of the baling chamber,
said sensor (16) is located at the location of or in the immediate vicinity of one of said reinforcement means;
said reinforcement means comprise support beams (15) attached to said displaceable walls, said support beams being arranged transversally with respect to said longitudinal direction (9), said actuation means being arranged for exerting a pressure on said displaceable sidewall(s) at the location of said support beams (15), and wherein said at least one sensor is located at the location of or in the immediate vicinity of one of said transversally arranged support beams (15);
**characterised in that,** when the friction or moisture sensor (16) is located between said transversally arranged support beams (15) and the baling chamber's first section (C) or between said support beams (15) and the baling chamber's second section (D), the distance between the friction or moisture sensor (16) and said transversally arranged support beams (15) is maximum one fourth of the distance between said transversally arranged support beams (15) and said first section (C) or second section (D) respectively.

2. The baler according to claim 1, wherein said reinforcement means comprise a ridge (20) provided in at least one of said sidewalls, said ridge being arranged transversally to said longitudinal direction (9), and pointing towards the centre of said baling chamber, and wherein said at least one friction or moisture sensor (16) is located at the location of or in the immediate vicinity of said ridge (20).

3. The baler according to claim 2, wherein, when the friction or moisture sensor (16) is located between said ridge (20) and the baling chamber's first section (C) or between said ridge (20) and the transversally arranged support beams (15), the distance between the friction or moisture sensor (16) and said ridge (20) is maximum one fourth of the distance between said ridge (20) and said first section (C) or said support beams (15) respectively.

4. The baler according to any one of the preceding claims, wherein said reinforcement means comprise one or more reinforcement beams (25) attached to one or more of said sidewalls, said reinforcement beams being arranged in the longitudinal direction of the baling chamber, and wherein a friction or moisture sensor (16) is located at the location of one of said reinforcement beams (25) or in the immediate vicinity of one of said reinforcement beams (25).

5. The baler according to any one of the preceding claims, wherein 'in the immediate vicinity' means : 'at a maximum distance of 25 cm'.

6. The baler according to any one of claims 1 to 4, wherein said sensor is located between 5 and 10 cm from said reinforcement means.

## Patentansprüche

1. Landwirtschaftliche Ballenpresse zum Erzeugen von rechteckigen Ballen mit:
einer Vorkammer (2),
einer Erntegutzuführungseinrichtung, die dazu eingerichtet ist, geerntetes Erntegut der Vorkammer (2) zuzuführen,
einer Presskammer (1), die dazu eingerichtet ist, vorverdichtetes Erntegut von der Vorkammer (2) zu empfangen, wobei die Presskammer aufweist:
vier Seitenwände (4, 5, 6, 7), die eine rechteckige Einfassung definieren, die sich in einer Längsrichtung (9) zwischen einem ersten Abschnitt (C) an der Eingangsseite der Presskammer und einem zweiten Abschnitt (D) an der Ausgangsseite der Kammer erstreckt, wobei mindestens eine der Seitenwände in einer Richtung senkrecht zur Längsrichtung verschiebbar ist, sodass der Querschnitt der Einfassung erhöht oder vermindert wird,
einen Presskolben (8) und einen Antriebsmechanismus, der dazu eingerichtet ist, den Kolben innerhalb der Einfassung hin und her zu bewegen, um dadurch Erntegut in der Längsrichtung zu bewegen, wodurch schrittweise ein rechteckiger Ballen in einem Ballenformungsprozess gebildet wird,
ein oder mehrere Verstärkungseinrichtungen (15, 20, 25), die in Verbindung mit mindestens einer der Seitenwände angeordnet sind, wobei die Verstärkungsmittel ein Hindernis bilden, das lokal die Verformung der Seitenwände durch nach außen Wölben bezüglich des Inneren der Presskammer neutralisiert oder begrenzt, wobei die Verformung eine Folge des Ballenformungsprozesses ist,
Betätigungsmitteln, die dazu eingerichtet sind, einen Druck auf die verschiebbare(n) Seitenwand/Seitenwände auszuüben, um dadurch die Verschiebung der Seitenwand/Seitenwände zu bewirken;
mindestens einem Reibungs- oder Feuchtigkeitssensor (16), der an einer der verschiebbaren Seitenwände der Presskammer angebracht ist,
wobei der Sensor (16) an dem Ort oder in unmittelbarer Nähe einer der Verstärkungseinrichtungen angeordnet ist;
wobei die Verstärkungseinrichtungen Trägerbalken (15) aufweisen, die an den verschiebbaren Wänden angebracht sind, wobei die Trägerbalken quer bezüglich der Längsrichtung (9) angeordnet sind, wobei die Betätigungseinrichtungen zum Ausüben eines Drucks auf die verschiebbare Seitenwand/Seitenwände an dem Ort der Trägerbalken (15) eingerichtet sind, und wobei der mindestens eine Sensor an dem Ort oder in der unmittelbaren Nähe der quer angeordneten Trägerbalken (15) angeordnet ist;
**dadurch gekennzeichnet, dass**,
wenn der Reibungs- oder Feuchtigkeitssensor (16) zwischen dem quer angeordneten Trägerbalken (15) und dem ersten Abschnitt (C) der Presskammer oder zwischen den Trägerbalken (15) und dem zweiten Abschnitt (D) der Presskammer angeordnet ist, der Abstand zwischen dem Reibungs- oder Feuchtigkeitssensor (16) und den quer angeordneten Trägerbalken (15) maximal ein Viertel des Abstandes zwischen den quer angeordneten Trägerbalken (15) und dem ersten Abschnitt (C) bzw. dem zweiten Abschnitt (D) ist.

2. Ballenpresse nach Anspruch 1, wobei die Verstärkungseinrichtungen eine Erhöhung (20) aufweisen, die in mindestens einer der Seitenwände vorgesehen ist, wobei die Erhöhung quer zu der Längsrichtung (9) angeordnet ist und zum Mittelpunkt der Presskammer hin zeigt, und wobei der mindestens eine Reibungs- oder Feuchtigkeitssensor (16) an dem Ort oder in unmittelbarer Nachbarschaft der Erhöhung (20) angeordnet ist.

3. Ballenpresse nach Anspruch 2, wobei, wenn der Reibungs- oder Feuchtigkeitssensor (16) zwischen der Erhöhung (20) und dem ersten Abschnitt (C) der Presskammer oder zwischen der Erhöhung (20) und den quer angeordneten Trägerbalken (15) angeordnet ist, der Abstand zwischen dem Reibungs- oder Feuchtigkeitssensor (16) und der Erhöhung (20) maximal ein Viertel des Abstands zwischen der Erhöhung (20) und dem ersten Abschnitt (C) bzw. den Trägerbalken (15) beträgt.

4. Ballenpresse nach einem der vorhergehenden Ansprüche, wobei die Verstärkungseinrichtungen einen oder mehrere Verstärkungsbalken (25) aufweisen, die an einer oder mehreren der Seitenwände befestigt sind, wobei die Verstärkungsbalken in der Längsrichtung der Presskammer angeordnet sind, und wobei ein Reibungs- oder Feuchtigkeitssensor (16) an dem Ort eines der Verstärkungsbalken (25) oder in unmittelbarer Nähe eines der Verstärkungsbalken (25) angeordnet ist.

5. Ballenpresse nach einem der vorhergehenden Ansprüche, wobei "in der unmittelbaren Nähe" bedeutet: "in einem maximalen Abstand von 25 cm".

6. Ballenpresse nach einem der Ansprüche 1 bis 4, wobei der Sensor zwischen 5 und 10 cm von den Verstärkungseinrichtungen angeordnet ist.

## Revendications

1. Ramasseuse-presse à balles agricole pour produire des balles rectangulaires comprenant :
• une chambre de pré-compression (2),
• un moyen d'alimentation de matériau de récolte conçu pour alimenter du matériau récolté jusqu'à ladite chambre de pré-compression (2),
• une chambre de compression (1) conçue pour recevoir du matériau pré-comprimé depuis la chambre de précompression (2), la chambre de compression comprenant :
* quatre parois latérales (4, 5, 6, 7) définissant une enceinte rectangulaire s'étendant dans une direction longitudinale (9) entre une première section (C) au côté d'entrée de la chambre de compression et une seconde section (D) au côté de sortie de ladite chambre, au moins une des dites parois pouvant être déplacée dans une direction perpendiculaire à ladite direction longitudinale, de façon à augmenter ou diminuer la section transversale de ladite enceinte,
* un piston (8) et un mécanisme d'entraînement adapté pour déplacer en un mouvement de va-et-vient ledit piston à l'intérieur de ladite enceinte, pour déplacer ainsi ledit matériau de récolte dans ladite direction longitudinale, afin de former ainsi progressivement une balle rectangulaire dans un processus de formation de balle,
* un ou plusieurs moyens de renfort (15, 20, 25) agencés en connexion avec au moins une des dites parois latérales, ledit moyen de renfort formant une entrave qui neutralise ou limite localement la déformation desdites parois latérales par un gonflement vers l'extérieur par rapport à l'intérieur de la chambre de compression, ladite déformation étant une conséquence du dit processus de formation de balle,
• un moyen d'actionnement agencé pour exercer une pression sur ladite(lesdites) paroi(s) latérale(s) pouvant être déplacée(s), pour actionner ainsi un déplacement de ladite (des dites) paroi(s) latérale(s),
• au moins un capteur de frottement ou d'humidité (16) monté sur l'une des dites parois pouvant être déplacées de la chambre de compression,
ledit capteur (16) étant placé à l'emplacement ou à proximité immédiate du dit moyen de renfort, ledit moyen de renfort comprenant des poutres de support (15) fixées aux dites parois pouvant être déplacées, lesdites poutres de support étant agencées transversalement par rapport à ladite direction longitudinale (9), ledit moyen d'actionnement étant agencé pour exercer une pression sur ladite(lesdites) paroi(s) latérale(s) pouvant être déplacée(s) à l'emplacement des dites poutres de support (15), et dans laquelle ledit au moins un capteur est placé à l'emplacement ou à proximité immédiate de l'une des dites poutres de support agencées transversalement (15),
**caractérisée en ce que,** lorsque le capteur de frottement ou d'humidité (16) est situé entre lesdites poutres de support agencées transversalement (15) et la première section de la chambre de compression (C) ou entre lesdites poutres de support (15) et la seconde section (D) de la chambre de compression, la distance entre le capteur de frottement ou d'humidité (16) et lesdites poutres de support agencées transversalement (15) est au maximum d'un quart de la distance respective entre lesdites poutres de support agencées transversalement (15) et ladite première section (C) ou seconde section (D).

2. Ramasseuse-presse à balles selon la revendication 1, dans laquelle ledit moyen de renfort comprend une nervure (20) agencée dans au moins une des dites parois latérales, ladite nervure étant agencée transversalement à ladite direction longitudinale (9), et pointant vers le centre de ladite chambre de compression, et dans laquelle au moins un capteur de frottement ou d'humidité (16) est placé à l'emplacement ou à proximité immédiate de ladite nervure (20).

3. Ramasseuse-presse à balles selon la revendication 2, dans laquelle, quand le capteur de frottement ou d'humidité (16) est placé entre ladite nervure (20) et la première section (C) de la chambre de compression ou entre ladite nervure (20) et les poutres de support agencées transversalement (15), et la distance entre le capteur de frottement ou d'humidité (16) et ladite nervure (20) est au maximum d'un quart de la distance respective entre ladite nervure (20) et ladite première section (C) ou les dites poutres de support (15).

4. Ramasseuse-presse à balles selon l'une quelconque des revendications, dans laquelle ledit moyen de renfort comprend une ou plusieurs poutres de renfort (25) fixées à une ou plusieurs des dites parois latérales, lesdites poutres de renfort étant agencées dans la direction longitudinale de la chambre de compression, et dans laquelle un capteur de frottement ou d'humidité (16) est placé à l'emplacement d'une des dites poutres de renfort (25) ou à proximité immédiate d'une des dites poutres de renfort (25).

5. Ramasseuse-presse à balles selon l'une quelconque des revendications, dans laquelle à proximité immédiate' signifie : « à une distance maximale de 25 cm ».

6. Ramasseuse-presse à balles selon l'une quelconque des revendications 1 à 4, dans laquelle ledit capteur est situé à une distance d'entre 5 et 10 cm du dit moyen de renfort.
